# EUROPEAN PATENT APPLICATION

(11) **EP 4 206 682 A1**
(43) Date of publication of application: **05.07.2023**
(21) Application number: 22216027.7
(22) Date of filing: 22.12.2022
(51) Int. Cl.: G01N 35/10

(54) **LIQUID SUCTION DEVICE AND SAMPLE ANALYZER**

(30) Priority: 30.12.2021 CN 202111650978
(71) Applicant: Shenzhen New Industries Biomedical Engineering Co., Ltd., Shenzhen, Guangdong 518122 (CN)
(72) Inventor: XIONG, Yingchao, Shenzhen, 518122 (CN); WU, Dongpei, Shenzhen, 518122 (CN); YI, Wanguan, Shenzhen, 518122 (CN); LI, Jiang, Shenzhen, 518122 (CN)
(74) Representative: Berggren Oy

(57) **Abstract**

The invention relates to a liquid suction device and a sample analyzer, the liquid suction device is configured for sucking liquid in a containing box having a plurality of containing cavities, and the liquid suction device includes a supporting piece; and a plurality of liquid suction mechanisms, each of the liquid suction mechanisms includes a rotating unit, the rotating unit is slidably connected with the supporting piece and includes a rotating shaft, the central axis of the rotating shaft extends in the gravity direction, the liquid suction mechanism can revolve around the rotating shaft, and liquid in the different containing cavities in the containing box can be sucked by the plurality of liquid suction mechanisms at the same time. By disposing the plurality of liquid suction mechanisms, each liquid suction mechanism can perform revolution motion relative to a straight line extending along the gravity direction, namely, each liquid suction mechanism can suck liquid in the different containing cavities in the containing box. Therefore, the liquid suction speed is accelerated, and the working efficiency is improved.

## Description

### Cross-Reference to Related Application

The invention claims the priority to Chinese Patent Application No. CN202111650978.9, filed to the Chinese Patent Office on December 30, 2021 and entitled "Liquid Suction Device and Sample Analyzer", which is incorporated herein in its entirety by reference.

### Technical Field

The invention relates to the technical field of medical instruments, and in particular to a liquid suction device and a sample analyzer.

### Background

In the technical field of medical instruments, extraction and fusion work of a sample and a reagent occupies a key link, and a common mode is that liquid such as the reagent or the sample is added into a reaction cup from a containing box by utilizing a liquid suction device. However, a traditional liquid suction device can only suck one liquid in the containing box and inject the liquid into the reaction cup first, and then return to suck a second liquid, all suction work can be finished after repeated reciprocating, so that the liquid suction efficiency is low.

### Summary

One technical problem to be solved by the invention is how to improve the working efficiency of a liquid suction device.

A liquid suction device for sucking liquid in a containing box with a plurality of containing cavities, the liquid suction device including a supporting piece and a plurality of liquid suction mechanisms.

Each of the plurality of liquid suction mechanisms includes a rotating unit, the rotating unit is slidably connected with the supporting piece and includes a rotating shaft, the central axis of the rotating shaft extends along the gravity direction, the liquid suction mechanism can revolve around the rotating shaft, and liquid in the different containing cavities in the containing box can be sucked by the plurality of liquid suction mechanisms at the same time.

In an embodiment, the liquid suction mechanism further includes a liquid suction unit, the liquid suction unit includes a liquid suction body, the liquid suction body can revolve around the rotating shaft, and all the containing cavities in the same containing box can be covered with the addition of the revolution tracks of different liquid suction bodies of the plurality of liquid suction mechanisms around the rotating shaft.

In an embodiment, two liquid suction bodies are available, the liquid suction body on one liquid suction mechanism is marked as a first liquid suction body, the liquid suction body on the other liquid suction mechanism is marked as a second liquid suction body, the track formed by rotation of the first liquid suction body is a first circle, the track formed by rotation of the second liquid suction body is a second circle, and the areas where the first circle and the second circle are located can cover the partially connected containing cavities in the same containing box respectively so that the two liquid suction bodies can suck liquid in the different containing cavities in the same containing box.

In an embodiment, the first circle and the second circle intersect or are tangent under the condition that a connecting line between the center of the first circle and the center of the second circle is perpendicular to the gravity direction.

In an embodiment, when the first circle and the second circle intersect, an arc section, located in the second circle, of the first circle is marked as a first arc section, an arc section, located in the first circle, of the second circle is marked as a second arc section, and central angles corresponding to the first arc section and the second arc section are smaller than 180 degrees.

In an embodiment, when the first circle and the second circle intersect, a number of the containing cavities located in coverage areas of the first circle and the second circle at the same time in the same containing box is not more than two.

In an embodiment, when the first circle and the second circle cover one containing cavity in the same containing box at the same time and the first liquid suction body performs liquid suction work in the one containing cavity, the second liquid suction body is responsible for the liquid suction work of other containing cavities in the second circle.

In an embodiment, seven containing cavities are formed in the same containing box, each containing cavity contains liquids with different compositions, the seven containing cavities are sequentially marked as a No. 1 cavity, a No. 2 cavity, a No. 3 cavity, a No. 4 cavity, a No. 5 cavity, a No. 6 cavity and a No. 7 cavity from one end to the other end of the containing box, and the No. 5 cavity is located in a common coverage area of the first circle and the second circle.

In an embodiment, the boundary formed by movement tracks of the plurality of liquid suction mechanisms is a closed-loop double-waist-shaped curve.

In an embodiment, the diameters of the first circle and the second circle are equal, and the central angles corresponding to the first arc section and the second arc section are equal.

In an embodiment, two liquid suction mechanisms are available, the two liquid suction mechanisms can slide along two straight lines which extend in a direction perpendicular to the gravity direction and are parallel to each other relative to the supporting piece, the supporting piece includes guide rails, a number of the guide rails is consistent with a number of the liquid suction mechanisms, the two liquid suction mechanisms slide linearly on the corresponding guide rails respectively, and the two guide rails are located on the same supporting piece.

In an embodiment, the supporting piece is of a plate-shaped structure, and the two liquid suction mechanisms are located on the same side, in the thickness direction, of the supporting piece.

In an embodiment, the central axis of the liquid suction body and the central axis of the rotating shaft are parallel to each other, with a certain distance between the central axis of the liquid suction body and the central axis of the rotating shaft.

In an embodiment, the liquid suction unit further includes a supporting arm, which is connected with the rotating shaft, and the liquid suction body is connected with the supporting arm in a sliding mode.

In an embodiment, the liquid suction unit further includes a power assembly, which is connected with the supporting arm, and drives the liquid suction body to slide.

A sample analyzer, including the liquid suction device of any one of the above.

One technical effect of the embodiment of the invention is that: by disposing the plurality of liquid suction mechanisms, each liquid suction mechanism can perform revolution motion relative to a straight line extending along the gravity direction, namely, each liquid suction mechanism can suck liquid in different containing cavities in the containing box. Therefore, the liquid suction speed is accelerated, and the working efficiency is improved.

### Brief Description of the Drawings

Fig. 1 is a schematic structure diagram of a perspective view of a liquid suction device according to an embodiment.
Fig. 2 is a schematic structure diagram of an exploded view of a liquid suction device as shown in Fig. 1.
Fig. 3 is schematic structure diagrams of a perspective view of a supporting piece and a driving assembly in a liquid suction device as shown in Fig. 1.
Fig. 4 is a schematic structure diagram of a perspective view of a rotating unit in a liquid suction device as shown in Fig. 1.
Fig. 5 is a schematic structure diagram of an exploded view of a rotating unit as shown in Fig. 4.
Fig. 6 is a schematic structure diagram of a perspective view of a liquid suction unit in a liquid suction device as shown in Fig. 1.
Fig. 7 is a schematic diagram of a movement track formed by two liquid suction bodies relative to a containing box in a liquid suction device as shown in Fig. 1.
Fig. 8 is a schematic structure diagram of a plan view of a containing box.
Fig. 9 is a schematic diagram illustrating three positions of a first circle in Fig. 7 during movement in the direction of the arrow.
Fig. 10 is a process flow block diagram of a liquid suction method.

### Detailed Description of the Embodiments

In order to facilitate an understanding of the invention, a more complete description of the invention will be made below with reference to the associated drawings. Preferred implementation modes of the invention are given in the drawings. However, the invention may be implemented in many different forms and is not limited to the implementation modes described herein. Rather, the implementation modes are provided so that a more thorough and complete understanding of the content of the invention is provided.

It is be to noted that when an element is referred to as being 'fixed' to another element, it may be directly on the other element or a medium element may also be present. When an element is referred to as being "connected" to another element, it may be directly connected to the other element or a medium element may also be present. As used herein, the terms "inner", "outer", "left", "right", and similar expressions are only adopted for description, and are not meant to be the only implementation mode.

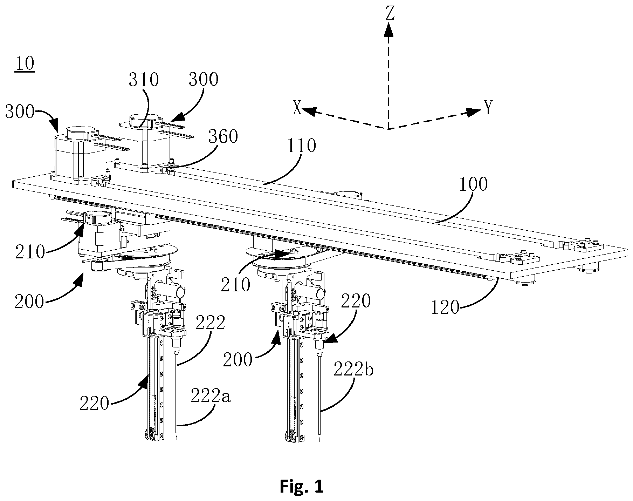

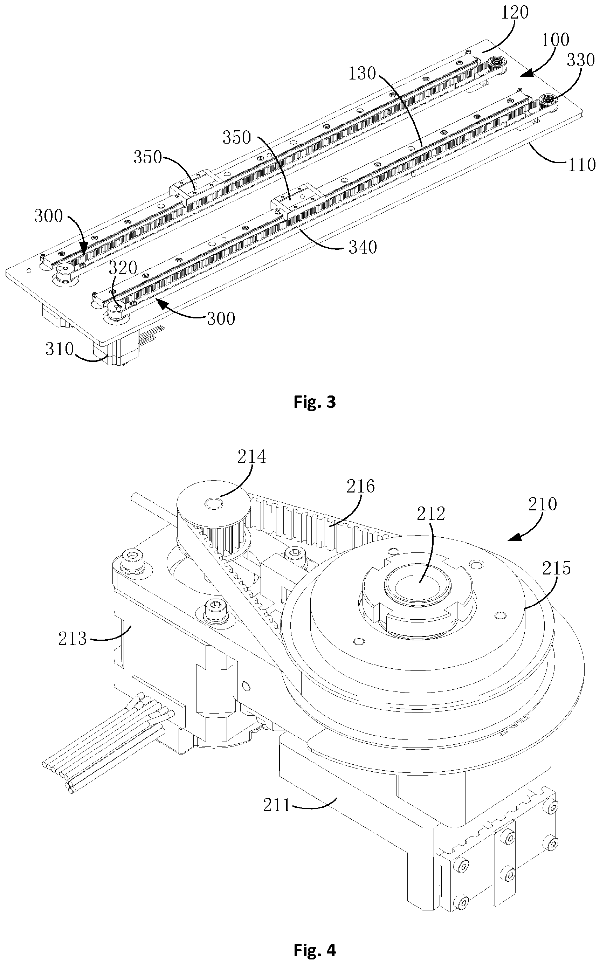

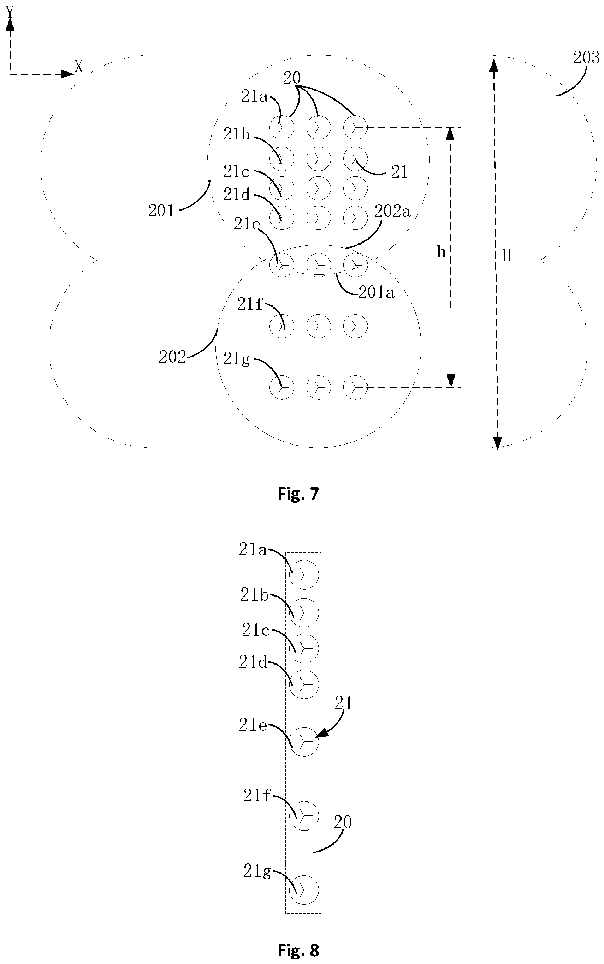

Referring to Figs. 1, 4, 7 and 8, a liquid suction device 10 provided by an embodiment of the invention is configured for sucking liquid in a containing box 20, the containing box 20 is located below the liquid suction device 10, a plurality of containing cavities 21 are formed in the containing box 20, the containing cavities 21 can be used for containing reagents and samples, and different containing cavities 21 in the same containing box 20 can contain liquids with different compositions. A plurality of containing boxes 20 may be available, for example, the plurality of containing boxes 20 are disposed side by side along the X-axis direction, and for the plurality of containing cavities 21 in the same containing box 20, the plurality of containing cavities 21 may be arranged at intervals along the Y-axis direction. The liquid suction device 10 is configured for sucking liquid in each of the containing cavities 21 of the containing box 20 and injecting the sucked liquid into a reaction cup. The liquid suction device 10 includes a supporting piece 100, liquid suction mechanisms 200, and driving assemblies 300, and both the liquid suction mechanisms 200 and the driving assemblies 300 are disposed on the supporting piece 100. A plurality of liquid suction mechanisms 200 are provided and a plurality of driving assemblies 300 are provided, and the liquid suction mechanisms 200 form a one-to-one correspondence with the driving assemblies 300 such that the motion of each liquid suction mechanism 200 is powered by one driving assembly 300. For example, the numbers of the liquid suction mechanisms 200 and the number of the driving assemblies 300 are respectively two. Each liquid suction mechanism 200 includes a rotating unit 210, the rotating unit 210 is slidably connected with the supporting piece 100 and includes a rotating shaft 212, the central axis of the rotating shaft 212 extends along the gravity direction, the liquid suction mechanism 200 can revolve around the rotating shaft 212, meanwhile, liquid in the different containing cavities 21 in the containing box 20 can be sucked by the plurality of liquid suction mechanisms 200 at the same time, all liquid suction requirements of the same reaction vessel can be met without enabling the liquid suction mechanism 200 to suck liquid and spit liquid back and forth, so that the liquid suction efficiency is greatly improved.

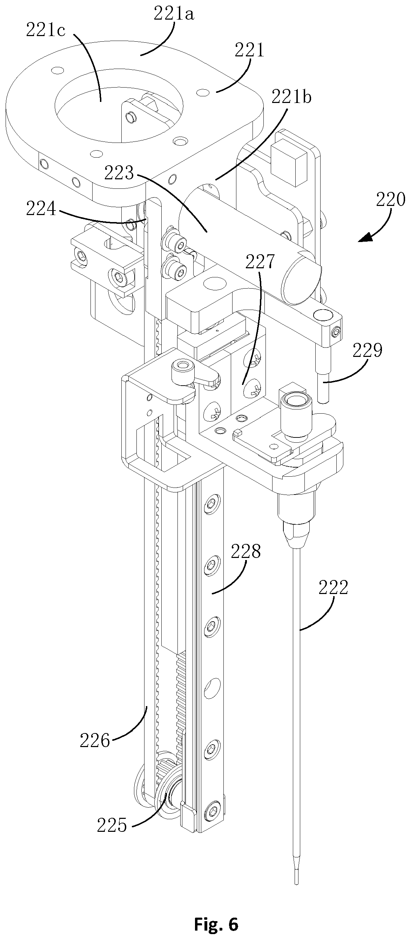

Referring to Figs. 1, 2 and 6, each liquid suction mechanism 200 includes a liquid suction unit 220, and the liquid suction unit 220 includes a supporting arm 221, a liquid suction body 222 and a power assembly. The supporting arm 221 includes a transversal arm 221a and a longitudinal arm 221b, and the transversal arm 221a and the longitudinal arm 221b may be fixedly connected, for example, the transversal arm 221a and the longitudinal arm 221b may be integrally formed. By fixedly connecting the transversal arm 221a and the longitudinal arm 221b, relative rotation or sliding between the transversal arm 221a and the longitudinal arm 221b can be prevented, so that vibration can be reduced, and the stability and reliability of the movement of the entire supporting arm 221 can be improved. The transversal arm 221a may be of a plate-shaped structure extending in the horizontal direction, and the longitudinal arm 221b extends in the gravitation direction. A mounting hole 221c is formed in the transverse arm 221a , and the longitudinal arm 221b is connected with the edge of the transverse arm 221a and perpendicular to a plane where the transverse arm 221a is located, so that central axes of the longitudinal arm 221b and the mounting hole 221c are spaced apart from each other by a set distance in a direction perpendicular to the gravity direction, that is, the two are spaced apart from each other in the horizontal direction. The rotating shaft 212 is matched with the mounting hole 221c so that the transverse arm 221a of the supporting arm 221 is connected with the rotating shaft 212, and the liquid suction body 222 and the power assembly are disposed on the longitudinal arm 221b of the supporting arm 221. When the rotating shaft 212 rotates, the entire liquid suction unit 220 can rotate following the rotating shaft 212 by the supporting arm 221. The liquid suction body 222 may be a needle-like structure with a long strip shape, that is, the liquid suction body 222 is a liquid suction needle. The power assembly includes a third motor 223, a third driving wheel 224, a third driven wheel 225, a third conveyor belt 226 and a second slider 227, the third motor 223 is disposed on the supporting arm 221, the third driving wheel 224 is connected with an output shaft of the third motor 223, the third driven wheel 225 is rotatably disposed on the supporting arm 221, the third conveyor belt 226 sleeves the third driving wheel 224 and the third driven wheel 225, the third driving wheel 224 and the third driven wheel 225 have the same diameter and are disposed at an interval along the Z-axis direction, so that a tight edge or a loose edge of the third conveyor belt 226 extends along the Z-axis direction. The supporting arm 221 is further provided with a slide rail 228, the slide rail 228 extends along the Z-axis direction, the second slider 227 is slidably matched with the slide rail 228 and fixed on the tight side or the loose side of the third conveyor belt 226, the liquid suction body 222 is fixed on the second slider 227, and the central axis of the liquid suction body 222 extends along the Z-axis direction. When the third motor 223 works, the second slider 227 can be driven by the third conveyor belt 226 to slide back and forth on the slide rail 228 along the gravity direction (Z-axis direction), so that the liquid suction body 222 slides back and forth in the Z-axis direction following the second slider 227. When the liquid suction body 222 moves downwards following the second slider 227, the liquid suction body 222 can stretch into the containing cavity 21 of the containing box 20 to suck liquid; and when the liquid suction body 222 moves upwards following the second slider 227, the liquid suction body 222 after sucking the liquid can exit from the containing cavity 21 of the containing box 20, so that the sucked liquid can be injected into the reaction cup subsequently. The liquid suction unit 220 may also include a probe 229, which is actually a type of position sensor. The probe 229 is fixed at a preset position on the supporting arm 221, and the position of the probe 229 may be used as an initialization position for reference by the second slider 227 and the liquid suction body 222. The probe 229 will generate a prompt signal when the liquid suction body 222 moves to the initialization position along the Z-axis. Therefore, the probe 229 is provided to calibrate the initialization position at which the liquid suction body 222 slides along the Z-axis direction.

The central axis of the liquid suction body 222 and the central axis of the rotating shaft 212 are parallel to each other, that is, the two are spaced by a certain distance, so that the liquid suction body 222 can revolve relative to the rotating shaft 212, and interference between the liquid suction body 222 and the rotating shaft 212 is avoided. When the rotating shaft 212 drives the whole liquid suction unit 220 to rotate, the liquid suction body 222 revolves around the rotating shaft 212. When the first motor 310 drives the whole liquid suction mechanism 200 to do reciprocating linear motion in the X-axis direction through the first slider 350, the liquid suction body 222 can do reciprocating linear motion in the X-axis direction. When the second motor 213 drives the liquid suction unit 220 to rotate through the rotating shaft 212, the liquid suction body 222 revolves around the central axis extending in the Z-axis direction. When the third motor 223 drives the liquid suction body 222 to move through the second slider 227, the liquid suction body 222 can do reciprocating linear motion in the X-axis direction. Therefore, each liquid suction body 222 can do reciprocating linear motion in the X-axis direction and can also do reciprocating linear motion in the Z-axis direction and revolve around a central axis extending in the Z-axis direction, that is, each liquid suction body 222 has three-degree-of-freedom movement. In such a case, it is guaranteed that all the containing cavities 21 in the same containing box 20 can be covered with the addition of the revolution tracks of the liquid suction bodies 222 around the rotating shafts 212, the batch difference between the containing boxes 20 can be avoided, the accuracy of the result can be improved, and the working efficiency of the liquid suction device 10 can be improved. In view of the improved stability and reliability of the movement of the supporting arm 221, the movement accuracy of the entire liquid suction body 222 can be improved, and it is guaranteed that the liquid suction body 222 accurately moves to a designated position.

Referring to Figs. 1, 2, and 3, in some embodiments, the supporting piece 100 is of a flat-plate-shaped structure, which facilitates manufacturing and processing of the supporting piece 100 and also makes the structure of the supporting piece 100 simple. The supporting piece 100 has an upper surface 110 and a lower surface 120, which are two surfaces spaced apart in the thickness direction of the supporting plate. The supporting piece 100 further includes guide rails 130, the guide rails 130 are disposed on the lower surface 120 and protrude by a certain height relative to the lower surface 120, the guide rails 130 extend in the X-axis direction with the same space rectangular coordinate system as a reference, the number of the guide rails 130 is the same as that of the liquid suction mechanisms 200, two liquid suction mechanisms 200 are available, the two liquid suction mechanisms 200 can slide along two straight lines which extend in a direction perpendicular to the gravity direction and are parallel to each other relative to the supporting piece 100, the two liquid suction mechanisms 200 slide linearly on the corresponding guide rails 130 receptively, and the two guide rails 130 are disposed in parallel so that the two guide rails 130 are spaced by a certain distance in the Y-axis direction. The two guide rails 130 are disposed on the same supporting piece 100, so that the structure of the whole liquid suction device 10 can be simplified. Each driving assembly 300 includes a first motor 310, a first driving wheel 320, a first driven wheel 330, a first conveyor belt 340 and a first slider 350, a main body part of the first motor 310 is disposed on the upper surface 110 of the supporting piece 100, an output shaft of the first motor 310 is disposed in the supporting piece 100 in a penetrating mode and extends to the lower surface 120 of the supporting piece 100, and the first driving wheel 320, the first driven wheel 330, the first conveyor belt 340 and the first slider 350 are all disposed on the lower surface 120 of the supporting piece 100. The first driving wheel 320 and the first driven wheel 330 have the same diameter and are disposed at an interval in the X-axis direction, the first driving wheel 320 is disposed on the output shaft of the first motor 310, the second driven wheel 215 is rotationally disposed on the supporting piece 100, the first conveyor belt 340 sleeves the first driving wheel 320 and the first driven wheel 330, the tight edge or the loose edge of the first conveyor belt 340 extends in the X-axis direction, and the first slider 350 is slidingly matched with the guide rail 130 and fixed to the tight side or loose side of the first conveyor belt 340. When the first motor 310 works, the first conveyor belt 340 can drive the first slider 350 to do reciprocating linear motion in the X-axis direction relative to the guide rail 130. The whole liquid suction mechanism 200 is fixed to the first slider 350, so that the liquid suction mechanism 200 can follow the first slider 350 to do reciprocating linear motion in the X-axis direction, and meanwhile, the two liquid suction mechanisms 200 are located on the side (i.e., lower side) where the lower surface 120 of supporting piece 100 is located. With the normal placement posture of the liquid suction device 10 during working as the reference, the gravity direction is always vertically downward, it can be understood that the gravity direction represents the Z-axis direction, when the first motors 310 on the two driving assemblies 300 work at the same time, the two liquid suction mechanisms 200 can be driven by the different first sliders 350 to do reciprocating linear motion on the different guide rails 130 in the X-axis direction, in other words, the two liquid suction mechanisms 200 slide along two straight lines which extend in a direction perpendicular to the gravity direction and are parallel to each other relative to the supporting piece 100.

The driving assembly 300 can further include an initialization optical coupler 360 which is disposed at a preset position of the supporting piece 100, and the position of the initialization optical coupler 360 may be used as an initialization position for reference by the first slider 350 and the liquid suction mechanism 200. When the entire liquid suction mechanism 200 follows the first slider 350 to move to the initialization position, the initialization optical coupler 360 will generate a prompt signal. Therefore, the initialization optical coupler 360 is provided to calibrate the initialization position at which the whole liquid suction mechanism 200 slides along the X-axis direction.

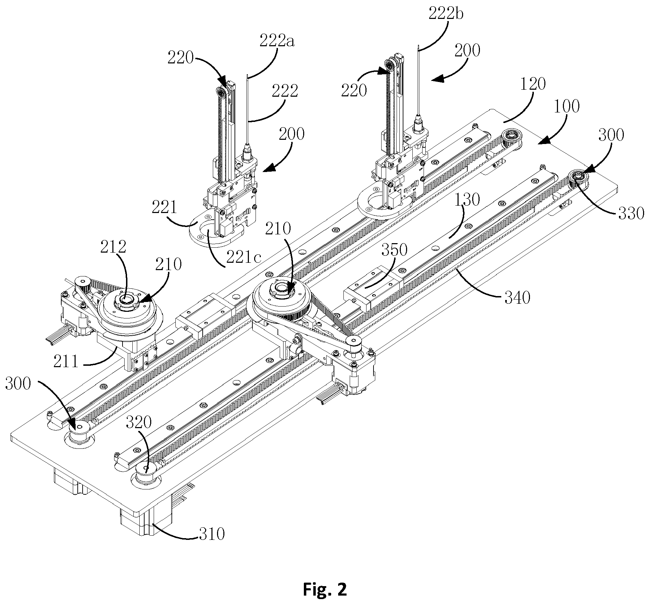

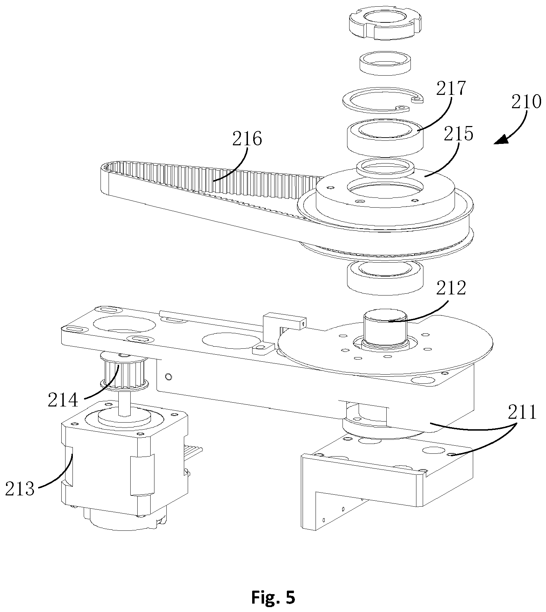

Referring to Figs. 2, 4 and 5, in some embodiments, the rotating unit 210 includes a base 211, a rotating shaft 212, a second motor 213, a second driving wheel 214, a second driven wheel 215 and a second conveyor belt 216, the base 211 is fixed on the first slider 350, the second motor 213 is disposed on the base 211, the second driving wheel 214 is connected with an output shaft of the second motor 213, the second driving wheel 214 can rotate following an output shaft of the second motor 213, the second driven wheel 215 is disposed on the base 211, the rotating shaft 212 can be fixed to the second driven wheel 215 through a deep groove ball bearing 217, the central axis of the rotating shaft 212 extends in the gravity direction (Z-axis direction), the second conveyor belt 216 sleeves the second driving wheel 214 and the second driven wheel 215, and the diameter of the second driven wheel 215 may be greater than that of the second driving wheel 214, which may cause the rotation speed of the second driven wheel 215 to be smaller than the rotation speed of the second driving wheel 214. When the second motor 213 works, the second driven wheel 215 can be driven to rotate by the second conveyor belt 216, so that the rotating shaft 212 follows the second driven wheel 215 to rotate around the central axis extending in the Z-axis direction, in other words, the rotating shaft 212 is rotationally connected with the base 211. Because the base 211 is fixed on the first slider 350, when the first slider 350 does reciprocating linear motion in the X-axis direction on the guide rail 130, the whole liquid suction mechanism 200 follows the first slider 350 to do reciprocating linear motion in the X-axis direction through the base 211. The relative movement of the liquid suction mechanism 200, the rotating shaft 212 and the liquid suction body 222 is all driven by different conveyor belts and does not interfere with one another, and the speed can also be improved.

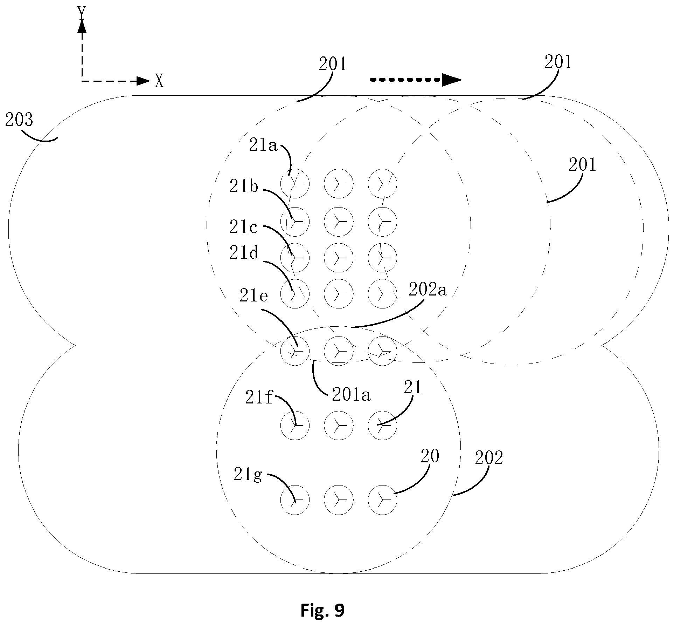

Referring to Figs. 1, 7 and 9, for easy of description, the liquid suction body 222 on one liquid suction mechanism 200 is marked as a first liquid suction body 222a, the liquid suction body 222 on the other liquid suction mechanism 200 is marked as a second liquid suction body 222b, the track formed by revolution of the first liquid suction body 222a around the rotating shaft 212 is a first circle 201, and the track formed by revolution of the second liquid suction body 222b around the rotating shaft 212 is a second circle 202. The areas where the first circle 201 and the second circle 202 are located can cover the partially connected containing cavities 21 in the same containing box 20 respectively so that the two liquid suction bodies 222 can suck liquid in the different containing cavities 21 in the same containing box 20, so that the first liquid suction body 222a and the second liquid suction body 222b can continuously suck the continuous containing cavities 21 in the coverage range, in this way, the liquid suction bodies 222 do not need to sequentially suck liquid in a staggered mode, the liquid suction efficiency is high, and the avoiding structure is simple. Under the condition that a connecting line between the center of the first circle 201 and the center of the second circle 202 extends in the Y-axis direction, it is obvious that the connecting line is perpendicular to the sliding direction (namely the X-axis direction) of the whole liquid suction mechanism 200 relative to the supporting piece 100, the first circle 201 and the second circle 202 can intersect or be tangent or separated, as long as all the containing cavities 21 in the containing box 20 can be located in the total coverage area formed by the first circle 201 and the second circle 202, in such a case, all the containing cavities 21 in the same containing box 20 can be sucked, the batch difference between the containing boxes 20 can be avoided, the accuracy of the result can be improved, and the working efficiency of the liquid suction device 10 can be improved. Therefore, with the direction perpendicular to the sliding direction of the liquid suction mechanism 200 relative to the supporting piece 100 as a reference direction, the maximum distance between the first liquid suction body 222a and the second liquid suction body 222b in the reference direction is H, the distance between the two containing cavities 21 which are farthest away from each other in the same containing box 20 is h, and the value of H is greater than or equal to the value of h.

When the first circle 201 and the second circle 202 intersect, the arc section, located in the second circle 202, of the first circle 201 is marked as the first arc section 201a, the arc section, located in the first circle 201, of the second circle 202 is marked as the second arc section 202a, the central angles corresponding to the first arc section 201a and the second arc section 202a can be smaller than 180 degrees, so that the interference range of the two liquid suction bodies 222 is reduced, avoidance is simple, the speed is fast, the space utilization ratio of other structures is improved, in some embodiments, when the first circle 201 and the second circle 202 intersect, the number of the containing cavities 21 located in the common coverage area of the first circle 201 and the second circle 202 at the same time in the same containing box 20 is not more than two, and the containing cavity 21 which is sucked most frequently is selected to be located in the common coverage area, and the space utilization ratio can be improved. For example, the number of the containing cavities 21 located in the common coverage area in the same containing box 20 may be only one. The diameters of the first circle 201 and the second circle 202 may be equal, and the central angles corresponding to the first arc section 201a and the second arc section 202a may also be equal, so that the structures of the two liquid suction mechanisms 200 are substantially the same to simplify the structure.

Under the condition that the first circle 201 and the second circle 202 intersect or are tangent, each liquid suction body 222 reciprocates between two extreme positions in the X-axis direction, and the liquid suction body 222 revolves around a central axis extending in the Z-axis direction.

In some embodiments, the boundary formed by the movement tracks of the two liquid suction bodies 222 is appropriately a closed-loop double-waist-shaped curve, specifically, the double-waist-shaped curve induces two single-waist curves, each single-waist curve includes a straight line and two arc lines, the two arc lines are connected to two opposite ends of the straight line respectively, and openings of the two arc lines are disposed oppositely. The arc lines of the two single-waist curves are connected to form the double-waist-shaped curve. The area covered by the double-waist-shaped curve is a double-waist-shaped coverage area 203, and obviously, the two liquid suction bodies 222 can reach any position in the double-waist-shaped coverage area 203, and it is ensured that at least one of the first liquid suction body 222a and the second liquid suction body 222b can move to the position where each containing cavity 21 is located to suck liquid. The double-waist-shaped coverage area 203 is more advantageous in increasing the liquid sucking range of the liquid suction body 222 compared with a rectangular coverage area.

The plurality of containing boxes 20 are disposed side by side along the X-axis direction, and all the containing cavities 21 on the same containing box 20 are disposed at intervals along the Y-axis direction. Under the condition that all the containing cavities 21 in the same containing box 20 are located in the total coverage area formed by the first circle 201 and the second circle 202, it can be ensured that liquid in all the containing cavities 21 in the same containing box 20 can be sucked by at least one of the first liquid suction body 222a and the second liquid suction body 222b, that is, the whole liquid suction device 10 can suck liquid in all the containing cavities 21 in the same containing box 20. Under the condition that all the containing cavities 21 in the containing box 20 are located in double-waist-shaped coverage area 203, all the containing cavities 21 in the containing box 20 can be sucked by at least one of the first liquid suction body 222a and the second liquid suction body 222b. Therefore, under the condition that liquids with different compositions are contained in different containing cavities 21 in the same containing box 20, the liquid suction device 10 can simultaneously suck the liquids with different compositions in the different containing cavities 21 in the same containing box 20, and can also simultaneously suck liquid in the containing cavities 21 in the different containing boxes 20.

Seven containing cavities 21 can be formed in the same containing box 20, each containing cavity 21 contains liquid with different compositions, the seven containing cavities are sequentially marked as the No.1 cavity 21a, the No.2 cavity 21b, the No.3 cavity 21c, the No.4 cavity 21d, the No.5 cavity 21e, the No.6 cavity 21f and the No.7 cavity 21g from one end to the other end of the containing box 20. The No.1 cavity 21a to the No.5 cavity 21e are located in the first circle 201 of the revolution track of the first liquid suction body 222a, the No.5 cavity 21e to the No.7 cavity 21g are located in the second circle 202 of the revolution track of the second liquid suction body 222b, obviously, the No.5 cavity 21e is located in the common coverage area of the first circle 201 and the second circle 202, namely, the number of the containing cavities 21 located in the common coverage area is one, in this way, the No.5 cavity 21e can be sucked by two liquid suction bodies 222, when the first liquid suction body 222a needs to suck more liquid in the containing cavity 21 and needs to suck liquid in the No.5 cavity 21e, the second liquid suction body 222b can suck liquid in the No.5 cavity 21e, vice versa, therefore, the liquid suction time can be saved, and the liquid suction efficiency can be improved. Therefore, by means of linear motion in the X-axis direction and revolution motion around the central axis extending in the Z-axis direction, the first liquid suction body 222a can move to the position above any one containing cavity 21 in the No.1 cavity 21a to the No.5 cavity 21e to suck liquid in the containing cavity 21, namely, the first liquid suction body 222a is responsible for sucking liquid in the No. 1 cavity 21a to the No.5 cavity 21e, the second liquid suction body 222b can move to the position above any one containing cavity 21 in the No.5 cavity 21e to the No.7 cavity 21g to suck liquid in the containing cavity 21, that is, the second liquid suction body 222b is responsible for sucking liquid in the No.5 cavity 21e to the No.7 cavity 21g. For example, when the first liquid suction body 222a sucks liquid in the No.1 cavity 21a, the second liquid suction body 222b may suck liquid in any one containing cavity 21 of the No.5 to the No.7 cavity 21g, when the first liquid suction body 222a sucks liquid in the No.2 cavity 21b, the second liquid suction body 222b may suck liquid in any one containing cavity 21 of the No. 5 cavity to the No.7 cavity 21g, and so on, when the first liquid suction body 222a sucks liquid in the No.4 cavity 21d, the second liquid suction body 222b can suck liquid in any containing cavity 21 in the No.5 cavity to the No.7 cavity 21g, and therefore, the working efficiency is improved. When the first liquid suction body 222a sucks liquid in the No.5 cavity 21e, the second liquid suction body 222b can suck liquid in any containing cavity 21 of the No.6 cavity to the No. 7 cavity 21g. In this way, the liquid suction body 222 can be suitable for suction of liquid in a plurality of containing cavities 21 in the same or different containing boxes 20, and the liquid suction device 10 can suck liquid for a plurality of detection items and has higher applicability. The extension length of the liquid suction unit 220 in the direction perpendicular to the Y axis can be reasonably reduced, shaking of the liquid suction body 222 in the movement process is avoided, and the mechanical stability of the liquid suction unit 220 is improved.

Under the condition that a plurality of liquids with different compositions need to be added into the reaction cup, if only one liquid suction body 222 is available, the liquid suction body 222 needs to inject the liquid into the reaction cup and then suck the liquid from the containing cavity 21, so that a long time interval exists between the first addition and the second addition of the liquid in the reaction cup, and therefore, the time for filling the reaction cup with all the required liquid is prolonged or the time for injecting the liquid into different reaction cups is prolonged. Meanwhile, the coverage area of the movement track of one liquid suction body 222 is limited and may not cover all the containing cavities 21 in the containing box 20, so that liquid with part compositions cannot be sucked, even if the coverage area of the movement track of one liquid suction body 222 can cover all the containing cavities 21 in the containing box 20, the extending length of the liquid suction unit 220 in the direction perpendicular to the Z axis is large, therefore, the mechanical stability of the liquid suction unit 220 is influenced, and the liquid suction body 222 shakes with a large amplitude in the movement process to influence the suction or injection of the liquid.

For the liquid suction device 10 in the above embodiment, during the injection time period when the first liquid suction body 222a injects liquid into the reaction cup, the second liquid suction body 222b can fully utilize the injection time period to suck the liquid from the containing cavity 21, therefore, when the first liquid suction body 222a leaves the reaction cup, the second liquid suction 222b can reach the position of the reaction cup to quickly inject liquid into the reaction cup, namely, the time interval between the first addition and the second addition of the liquid in the reaction cup can be ignored, finally, the interval time between two adjacent liquid injections in the reaction cup is reduced or eliminated, and therefore, the working efficiency of the whole liquid suction device 10 is improved. The double-waist-shaped coverage area 203 formed by the two liquid suction bodies 222 is large enough to cover the containing cavities 21 in all the containing boxes 20, and therefore, the liquid suction range of the liquid suction device 10 is widened. Meanwhile, the separation distance between the central axis of the suction body 222 and the central axis of the rotating shaft 212 can be appropriately reduced, namely, the extension length of the liquid suction unit 220 in the direction perpendicular to the Y axis can be reasonably reduced, shaking of the liquid suction body 222 in the movement process is avoided, and the mechanical stability of the liquid suction unit 220 is improved. Meanwhile, the two liquid suction bodies 222 both have three-degree-of-freedom movement, so that the structure of the liquid suction device 10 can be simplified, the collision probability possibly generated between the two liquid suction bodies 222 is reduced, the difficulty of avoidance design of the liquid suction device 10 is finally reduced, and the liquid suction speed, liquid suction range, liquid suction stability and reliability, structure simplification and the like can be considered at the same time by the suction device 10.

When the same containing box 20 has containing cavities 21 located within the common coverage area of the first circle 201 and the second circle 202 at the same time, for example the No.5 cavity 21e is located within the common coverage area. For example, the reaction cup has a large demand for liquid in the No.5 cavity 21e, and it is difficult to meet the requirement with one injection of one liquid suction body 222. In such as case, liquid in the No.5 cavity 21e of one containing box 20 can be sucked and injected into the reaction cup through the first liquid suction body 222a,in the time period when the first liquid suction body 222a injects the liquid into the reaction cup, the second liquid suction body 222b can suck liquid in the No.5 cavity 21e of the same containing box 20 or the other containing box 20 in the time period, at the moment when the first liquid suction body 222a leaves the reaction cup, the second liquid suction body 222b sucking the liquid in the No.5 cavity 21e can just reach the reaction cup, so that the longer interval time between two times of liquid adding caused by the fact that the same liquid suction body 222 is adopted to suck the liquid in the No.5 cavity 21e can be eliminated, and the liquid suction efficiency is improved. Of course, the number of the containing cavities 21 located in the common coverage area of the first circle 201 and the second circle 202 in the same containing box 20 cannot be too large, so that the conflict probability caused by the fact that the first liquid suction body 222a and the second liquid suction body 222b reach the same containing cavity 21 at the same time is reduced, and the avoidance control difficulty of the two liquid suction bodies 222 in the movement process is reduced.

The invention further provides a sample analyzer, including the liquid suction device 10, so that the structure of the sample analyzer can be simplified on the basis of improving the working efficiency and the stability and reliability.

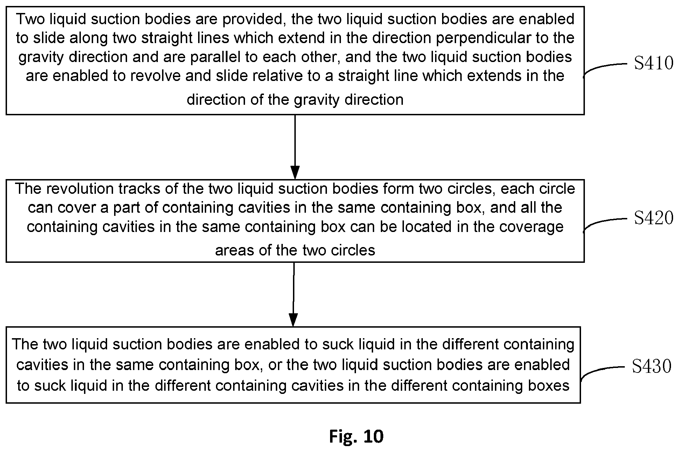

Referring to Fig. 10, the invention further provides a liquid suction method, which can be formed by the liquid suction device 10 described above. The liquid suction method mainly includes the following steps.

Step S410, two liquid suction bodies 222 are provided, the two liquid suction bodies 222 are enabled to slide along two straight lines which extend in the direction perpendicular to the gravity direction and are parallel to each other, and the two liquid suction bodies 222 are enabled to revolve and slide relative to a straight line which extends in the direction of the gravity direction.

Step S420, the revolution tracks of the two liquid suction bodies 222 form two circles, each circle can cover part of containing cavities 21 in the same containing box 20, and all the containing cavities 21 in the same containing box 20 can be located in the coverage area of the two circles.

Step S430, the two liquid suction bodies 222 are enabled to suck liquid in different containing cavities 21 in the same containing box 20, or the two liquid suction bodies 222 are enabled to suck liquid in different containing cavities 21 in different containing boxes 20.

Referring to Figs. 1, 7 and 9, the two liquid sucking bodies 222 are marked as the first liquid suction body 222a and the second liquid suction body 222b, during the time period when the first liquid suction body 222a injects liquid into the reaction cup, the second liquid suction body 222b can suck the liquid, at the moment that the first liquid suction body 222a finishing liquid injection leaves the reaction cup, the second liquid suction body 222b sucking liquid can reach the reaction cup to inject liquid, therefore, the interval time between two adjacent liquid injections in the reaction cup can be reduced or eliminated, and the working efficiency is improved. Moreover, two liquid suction bodies 222 are available and have three-degree-of-freedom movement, so that the area of the coverage area formed by the two circles is large enough, the liquid suction range is widened, shaking generated in the movement process of the liquid suction bodies 222 can be prevented, and the stability and reliability of liquid suction are improved. The collision probability between the liquid suction bodies 222 can also be reduced, so that the difficulty of avoidance design of the liquid suction bodies 222 is reduced.

In some embodiments, two circles formed by the revolution tracks of the two liquid suction bodies 222 intersect or are tangent, so that the two liquid suction bodies 222 can suck liquid in the same containing cavity 21 on the same containing box 20, specifically, the number of containing cavities 21 located in the common coverage area of the two circles at the same time in the same containing box 20 is not more than two, and thus the two liquid suction bodies 222 can suck liquid in the containing cavity 21 in the common coverage area. With reference to the above related description of the liquid suction device 10, the time interval between two adjacent liquid injections of the reaction cup can be eliminated, thereby improving the working efficiency.

The technical features of the above-described embodiments may be randomly combined, and not all possible combinations of the technical features in the above-described embodiments are described for simplicity of description, however, as long as the combinations of the technical features do not contradict each other, they should be considered to be within the scope of the description of the present specification.

The embodiments described above represent only several implementation modes of the invention, and the description thereof is specific and detailed, but should not be construed as limiting the scope of invention accordingly. It should be pointed out that those of ordinary skill in the art can also make some modifications and improvements without departing from the concept of the invention, and these modifications and improvements all fall within the scope of protection of the invention. Accordingly, the scope of the patent of the present application should be subject to the appended claims.

## Claims

1. A liquid suction device for sucking liquid in a containing box (20) with a plurality of containing cavities (21), wherein the liquid suction device comprises:
a supporting piece (100); and
a plurality of liquid suction mechanisms (200), each of the plurality of liquid suction mechanisms (200) comprises a rotating unit (210), the rotating unit is slidably connected with the supporting piece and comprises a rotating shaft (212), a central axis of the rotating shaft (212) extends along a gravity direction, the liquid suction mechanism (200) can revolve around the rotating shaft (212), and liquid in different containing cavities (21) in the containing box (20) can be sucked by the plurality of liquid suction mechanisms (200) at the same time.

2. The liquid suction device as claimed in claim 1, wherein each of the plurality of the liquid suction mechanism (200) further comprises a liquid suction unit (220), the liquid suction unit (220) comprises a liquid suction body (222), the liquid suction body (222) can revolve around the rotating shaft (212), and all the containing cavities (21) in a same containing box (20) can be covered with addition of the revolution tracks of different liquid suction bodies (222) of the plurality of liquid suction mechanisms (200) around the rotating shaft (212).

3. The liquid suction device as claimed in claim 1, wherein two liquid suction mechanisms (200) are provided, the liquid suction body (222) on one liquid suction mechanism (200) is marked as a first liquid suction body (222a), the liquid suction body (222) on the other liquid suction mechanism (200) is marked as a second liquid suction body (222b), a track formed by rotation of the first liquid suction body (222a) is a first circle (201), a track formed by rotation of the second liquid suction body (222b) is a second circle (202), areas where the first circle (201) and the second circle (202) are located can cover partially connected containing cavities (21) in a same containing box (20) respectively so that two liquid suction bodies (222) of the two liquid suction mechanisms (200) can suck liquid in the different containing cavities (21) in the same containing box (20).

4. The liquid suction device as claimed in claim 3, wherein the first circle (201) and the second circle (202) intersect or are tangent under a condition that a connecting line between a center of the first circle (201) and a center of the second circle (202) is perpendicular to the gravity direction.

5. The liquid suction device as claimed in claim 4, wherein when the first circle (201) and the second circle (202) intersect, an arc section, located in the second circle (202), of the first circle (201) is marked as a first arc section (201a), an arc section, located in the first circle (201), of the second circle (202) is marked as a second arc section (202a), and central angles corresponding to the first arc section (201a) and the second arc section (202a) are smaller than 180 degrees.

6. The liquid suction device as claimed in claim 4, wherein when the first circle (201) and the second circle (202) intersect, a number of the containing cavities (21) located in a coverage area of the first circle (201) and the second circle (202) at the same time in the same containing box (20) is not more than two.

7. The liquid suction device as claimed in claim 6, wherein when the first circle (201) and the second circle (202) cover one containing cavity in the same containing box (20) at the same time and the first liquid suction body (222a) performs liquid suction work in the one containing cavity, the second liquid suction body (222b) is responsible for liquid suction work of other containing cavities in the second circle.

8. The liquid suction device as claimed in claim 7, wherein seven containing cavities (21) are formed in the same containing box (20), the containing cavities (21) contains liquid of different compositions, the seven containing cavities are sequentially marked as a No. 1 cavity (21a), a No. 2 cavity (21b), a No. 3 cavity (21c), a No. 4 cavity (21d), a No. 5 cavity (21e), a No. 6 cavity (21f) and a No. 7 cavity (21g) from one end to the other end of the containing box (20), and the No. 5 cavity (21e) is located in a common coverage area of the first circle and the second circle.

9. The liquid suction device as claimed in claim 1, wherein a boundary formed by movement tracks of the plurality of liquid suction mechanisms (200) is a closed-loop double-waist-shaped curve.

10. The liquid suction device as claimed in claim 5. wherein diameters of the first circle (201) and the second circle (202) are equal, and the central angles corresponding to the first arc section (201a) and the second arc section (202a) are equal.

11. The liquid suction device as claimed in claim 1, wherein two liquid suction mechanisms (200) are provided, the two liquid suction mechanisms (200) can slide along two straight lines which extend in a direction perpendicular to the gravity direction and are parallel to each other relative to the supporting piece, the supporting piece (100) comprises guide rails (130), a number of the guide rails (130) is consistent with a number of the liquid suction mechanisms (200), the two liquid suction mechanisms (200) slide linearly on corresponding guide rails (130) respectively, and the two guide rails (130) are located on a same supporting piece.

12. The liquid suction device as claimed in claim 11, wherein the supporting piece (100) is of a plate-shaped structure, and the two liquid suction mechanisms (200) are located on a same side, in the thickness direction, of the supporting piece (100).

13. The liquid suction device as claimed in claim 2, wherein a central axis of the liquid suction body (222) and the central axis of the rotating shaft (212) are parallel to each other, with a certain distance between the central axis of the liquid suction body (222) and the central axis of the rotating shaft (212).

14. The liquid suction device as claimed in claim 13, wherein the liquid suction unit further comprises a supporting arm (221), the supporting arm (221) is connected with the rotating shaft (212), and the liquid suction body (222) is connected with the supporting arm (221) in a sliding mode.

15. The liquid suction device as claimed in claim 14, wherein the liquid suction unit (210) further comprises a power assembly, which is connected with the supporting arm (221) and drives the liquid suction body (222) to slide.

16. A sample analyzer, comprising the liquid suction device as claimed in claim 1.
